# EUROPÄISCHE PATENTSCHRIFT

(11) **EP 0 982 184 B1**
(45) Veröffentlichungstag und Bekanntmachung des Hinweises auf die Patenterteilung: **15.02.2006**
(21) Anmeldenummer: 99116317.1
(22) Anmeldetag: 19.08.1999
(51) Int. Cl.: B60N 2/36

(54) **Hintersitzanordnung für ein Kraftfahrzeug**
Rear seat arrangement for automotive vehicle
Agencement de siège arrière de véhicule automobile

(30) Priorität: 26.08.1998 DE 19838734
(43) Veröffentlichungstag der Anmeldung: 01.03.2000
(73) Patentinhaber: ADAM OPEL AG, 65423 Rüsselsheim (DE); Dr.Ing. h.c. F. Porsche Aktiengesellschaft, 71287 Weissach (DE)
(72) Erfinder: Ehrhard, Winfried, Dipl.-Ing., 64839 Münster (DE); Adamski, Pawel, Dipl.-Ing., 71069 Sindelfingen (DE); Plate, Horst, Dipl.-Ing., 71735 Eberdingen (DE); Zarske, Rocco, Dipl.-Ing., 10437 Berlin (DE)
(74) Vertreter: Daniel, Ulrich W.P.

(56) Entgegenhaltungen:
- EP-A- 0 151 426
- DE-A- 4 334 354
- FR-A- 1 452 002
- US-A- 4 848 826
- US-A- 5 383 699
- US-A- 5 658 046

## Beschreibung

Die Erfindung betrifft eine Hintersitzanordnung für ein Kraftfahrzeug, welche vor einem Laderaum angeordnet ist und zur Vergrößerung des Laderaums zumindest einen verstellbaren Sitz aufweist, der an einem tiefer als der Laderaumboden gelegenen Fahrzeugboden abgestützt ist, wobei zur Schließung eines im Bereich des Laderaumbodens durch Verstellung des Sitzes gebildeten Spaltes zumindest eine etwa in der Ebene des Laderaumbodens liegende Abdeckung vorgesehen ist.

Eine derartige Hintersitzanordnung mit einem verstellbaren Sitz ist z. B. in der FR 1 452 002 beschrieben. Bei dieser bekannten Anordnung kann der Sitz in eine solche Position verstellt werden, in der die Rückfläche der Rückenlehne etwa in der Ebene des Laderaumbodens liegt. Zur Schließung eines durch die Verstellung des Sitzes zwischen der Rückenlehne und dem Laderaumboden entstandenen Spaltes ist eine an der Vorderkante des Laderaumbodens angelenkte Klappe vorgesehen, die nach der Verstellung des Sitzes in die Ebene des Laderaumbodens geschwenkt und in dieser Position gehalten wird. Eine solche Klappe kann aber nur einen Spalt bestimmter Größe abdecken, der bei einer festgelegten Verstellung des Sitzes, wie beispielsweise zuvor beschrieben, entsteht. Dadurch ergeben sich Einschränkungen sowohl hinsichtlich der Ausbildung als auch der Verstellung von solchen Sitzen. Zur Abdeckung von unterschiedlich großen bzw. veränderlichen Spalten, die sich bei mehrfach bzw. multifunktionell verstellbaren Sitzen ergeben, kann die in der FR 1 452 002 beschriebene Lösung nicht verwendet werden.

Der Erfindung liegt daher die Aufgabe zugrunde, eine Hintersitzanordnung nach dem Oberbegriff des Patentanspruches 1 zu schaffen, welche relativ einfach aufgebaut ist und die genannten Nachteile nicht mehr aufweist.

Diese Aufgabe wird erfindungsgemäß durch die Merkmale des Patentanspruches 1 gelöst, wonach die Abdeckung an einer in Längsrichtung des Kraftfahrzeuges und parallel zum Laderaumboden verstellbaren Halterung befestigt ist. Vorteilhafte Weiterbildungen der Erfindung sind Gegenstand der Unteransprüche.

Wesentliche Vorteile einer solchen Ausbildung bestehen darin, daß unabhängig von der Ausbildung und der Art der Verstellung bzw. Umwandlung des Sitzes der zwischen dem Sitz und dem Laderaumboden gebildete Spalt auf einfache Weise durch die parallel zum Laderaumboden kontinuierlich verstellbare Abdeckung abgedeckt werden kann. So können beispielsweise bei einem Sitz, der zur Erhöhung des Sitzkomforts in Längsrichtung des Kraftfahrzeuges verstellbar ist, unterschiedlich große Spalte zwischen dem Sitz und dem Laderaumboden entstehen, die durch jeweils entsprechende Verstellung der Abdeckung verschlossen werden können. Auch bei multifunktionellen Sitzen, welche in der Höhen- und/oder Querrichtung des Kraftfahrzeuges verstellbar oder umwandelbar sind, kann eine solche Abdeckung verwendet werden, da diese mit den verstellbaren Teilen eines solchen Sitzes nicht gekoppelt, sondern stets etwa in der Ebene des Laderaumbodens verstellbar ist. Sollte bei einem verstellbaren Sitz durch Schwenkung der Rückenlehne nach vorn, beispielsweise in eine etwa waagerechte Stellung, ein zusätzlicher Spalt zwischen der Rückenlehne und der übrigen Ladefläche entstehen, so kann auch dieser Spalt mittels einer zusätzlich an der Halterung angelenkten Klappe abgedeckt werden. Auch in diesem Falle ist erfindungsgemäß vorgesehen, daß die Rückenlehne mit ihrer Rückfläche und die Klappe eine etwa ebene Ladefläche bilden.

Ein Ausführungsbeispiel der Erfindung ist nachstehend anhand von Zeichnungen näher beschrieben. Es zeigen teilweise schematisch

Fig. 1: einen Innenraum eines Kraftfahrzeuges mit einer Hintersitzanordnung in einer nach vorn verstellten Position, wobei der zwischen einer Rückenlehne und einem Laderaumboden entstandene Spalt durch eine verstellbare Abdeckung abgedeckt ist;

Fig. 2: den Innenraum gemäß Fig. 1, jedoch mit einer in eine waagerechte Stellung überführten Rückenlehne der Sitzanordnung;

Fig. 3: eine räumliche Darstellung einer Halterung mit der daran angelenkten Abdeckung nach Fig. 1, ohne die umliegenden Teile.

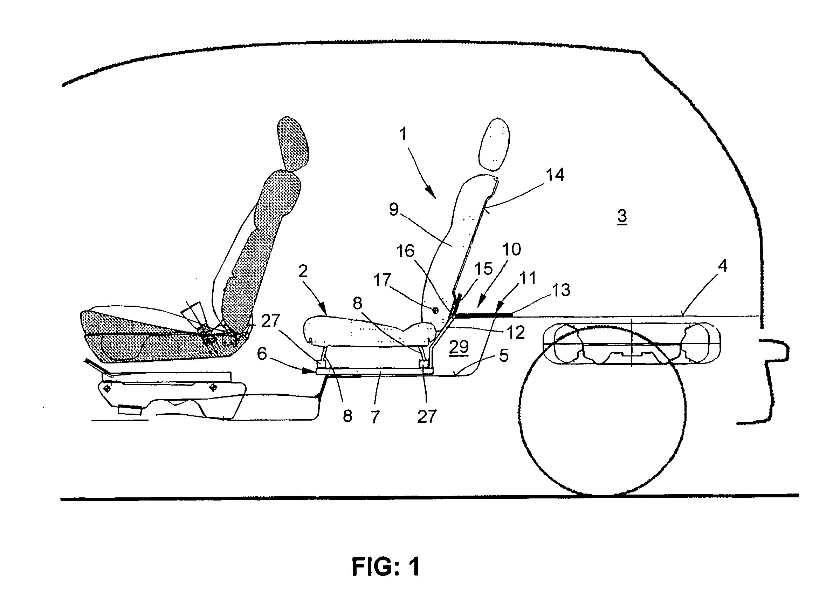

Eine in Fig. 1 dargestellte Hintersitzanordnung 1 weist einen mehrfach verstellbaren Sitz 2 auf, der vor einem Laderaum 3 und auf einem tiefer als der Laderaumboden 4 gelegenen Fahrzeugboden 5 angeordnet ist. Zur Erhöhung des Sitzkomforts kann dieser Sitz 2 in der Längsrichtung des Kraftfahrzeuges verstellt werden. Dazu sind am Fahrzeugboden 5 zwei beabstandet zueinander angeordnete Schienenpaare 6 vorgesehen, die jeweils eine gegenüber dem Fahrzeugboden 5 verstellbare und den Sitz 2 tragende Oberschiene 7 aufweisen. Die Verbindung zwischen dem Sitz 2 und den Oberschienen 7 erfolgt dabei mittels der Stützen 8, die auf eine noch zu erläuternde Art auch eine Verstellung des Sitzes 2 in Querrichtung des Kraftfahrzeuges sowie eine Absenkung des Sitzes 2 bis etwa zur Auflage am Fahrzeugboden 5 ermöglichen.

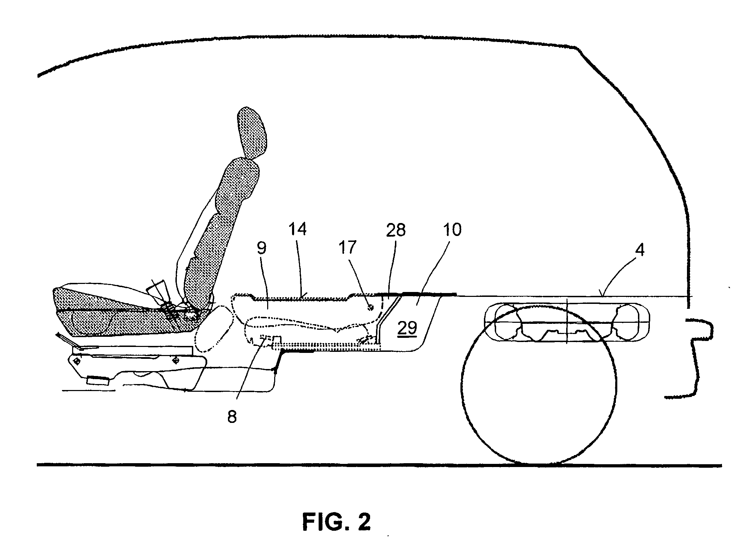

Bei der Verstellung des Sitzes 2 nach vorn ergibt sich zwischen der Rückenlehne 9 des Sitzes 2 und dem Laderaumboden 4 ein Spalt 10, der in Abhängigkeit von dem Verstellweg des Sitzes 2 unterschiedlich groß sein kann. Um diesen Spalt 10 zu schließen, ist eine Abdeckung 11 vorgesehen, die einerseits an einer mit den Oberschienen 7 verbundenen und dadurch gemeinsam mit dem Sitz 2 verstellbaren Halterung 12 und andererseits auf dem Laderaumboden 4 abgestützt ist. Die in jeder Stellung parallel zum Laderaumboden 4 ausgerichtete Abdeckung 11 ist dabei zweiteilig mit einer sich teilweise auf dem Laderaumboden 4 abstützenden Klappe 13 und einer etwa parallel zu einer Rückfläche 14 der Rückenlehne 9 ausgerichteten Klappe 15 ausgebildet. Beide Klappen 13, 15 sind um eine waagerecht und in Querrichtung des Kraftfahrzeuges ausgerichtete Achse 16 etwa in der Höhe des Laderaumbodens 4 an der Halterung 12 angelenkt. Bei der Verstellung des Sitzes 2 kann somit die sich am Laderaumboden 4 abstützende Klappe 13 parallel zum Laderaumboden 4 verschoben werden. Die etwa parallel zu der Rückfläche 14 der Rückenlehne 9 ausgerichtete Klappe 15 kann zur Schließung eines zusätzlichen Spaltes 28 bzw. Bildung einer ebenen Ladefläche, wie in Fig. 2 dargestellt, erst in die Ebene des Laderaumbodens 4 geschwenkt werden, wenn die Rückenlehne 9 um ihre Schwenkachse 17 in eine etwa waagerechte Stellung überführt ist, in der die Rückfläche 14 ebenfalls in der Ebene des Laderaumbodens 4 liegt.

Um die Rückenlehne 9 in eine solche Stellung zu bringen, ist der Sitz 2 höhenverstellbar ausgebildet. Dazu sind die in Fig. 1 dargestellten und den Sitz 2 tragenden Stützen 8 derart am Sitz 2 und an den Oberschienen 7 drehbar angelenkt, daß eine Verlagerung nach vorn bei einer gleichzeitigen Absenkung des Sitzes 2 bis etwa zur Auflage auf dem Fahrzeugboden 5 möglich ist. In dieser Position bildet die in die waagerechte Stellung überführte Rückenlehne 9 zusammen mit den ebenfalls in einer waagerechten Stellung befindlichen Klappen 13, 15 eine durchgehende Ladefläche.

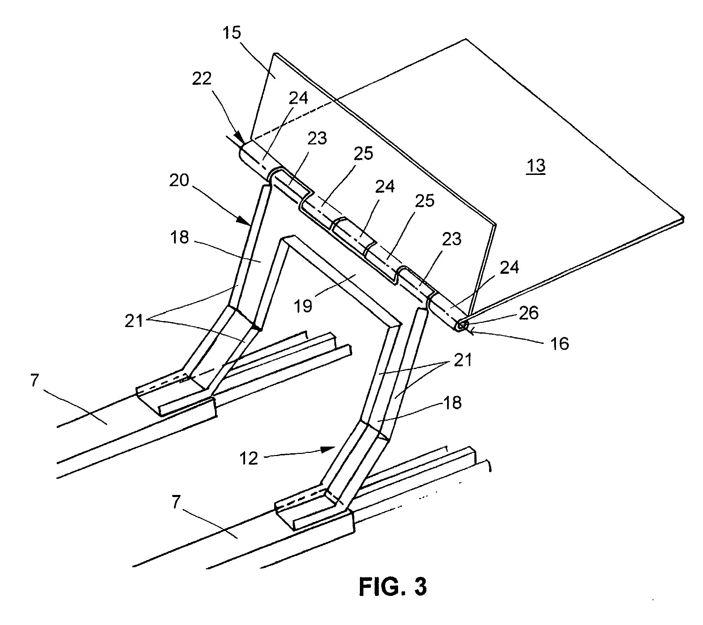

Zur Verbindung mit den Oberschienen 7 weist die Halterung 12 zwei Stützbeine 18 auf, welche - wie in Fig. 3 dargestellt - beabstandet zueinander angeordnet und mittels eines in Querrichtung des Kraftfahrzeuges verlaufenden Mittelteils 19 miteinander verbunden sind. Eine solche Halterung 12 kann einteilig aus Metall, beispielsweise als Blechteil 20 mit entsprechend verlaufenden Versteifungen 21 hergestellt sein und zur Aufnahme sowohl der Achse 16 als auch der Klappen 13, 15 am Mittelteil 19 eine Scharnierung in Art eines Klavierbandes 22 aufweisen. Hierzu können am Mittelteil 19 entsprechend beabstandet zueinander zwei Lagerbuchsen 23, an der waagerechten Klappe 13 drei Lagerbuchsen 24 und an der etwa vertikalen Klappe 15 zwei Lagerbuchsen 25 angeformt sein, die von einem die Achse 16 bildenden Querstab 26 durchsetzt und dadurch drehbar um die Achse 16 gehalten sind. Im dargestellten Beispiel sind die Stützbeine 18 durch Schweißen fest mit den jeweiligen Oberschienen 7 verbunden. Eine Verbindung zwischen den Stützbeinen 18 und den Oberschienen 7 kann in Abhängigkeit von Montagebedingungen auch lösbar durch beispielsweise jeweils eine oder mehrere Schraubverbindungen erfolgen.

Um den Sitzkomfort noch weiter zu erhöhen, ist der in Fig. 1 dargestellte Sitz 2 auch in Querrichtung des Kraftfahrzeuges verstellbar ausgebildet. Dazu sind zwei weitere über den jeweiligen Oberschienen 7 beabstandet zueinander angeordnete und fest mit den Oberschienen 7 verbundene Schienenpaare 27 vorgesehen, welche auf eine nicht dargestellte Weise die Stützen 8 des Sitzes 2 in Querrichtung des Kraftfahrzeuges verschiebbar lagern. Ein besonderer Vorteil der Erfindung bei dieser Ausführung besteht dabei darin, daß bei einer solchen Querverstellung des Sitzes 2 die ebenfalls mit den Oberschienen 7 verbundene und den Spalt 10 schließende Abdeckung 11 in ihrer Stellung verbleibt, so daß die etwa ebene Ladefläche in ihrer Länge bzw. Breite nicht verändert wird.

## Patentansprüche

1. Hintersitzanordnung für ein Kraftfahrzeug, welche vor einem Laderaum angeordnet ist und zur Vergrößerung des Laderaums zumindest einen verstellbaren Sitz aufweist, der an einem tiefer als der Laderaumboden gelegenen Fahrzeugboden abgestützt ist, wobei zur Schließung eines im Bereich des Laderaumbodens durch Verstellung des Sitzes gebildeten Spaltes zumindest eine etwa in der Ebene des Laderaumbodens liegende Abdeckung vorgesehen ist, **dadurch gekennzeichnet, daß** die Abdeckung (11) an einer in Längsrichtung des Kraftfahrzeuges und parallel zum Laderaumboden (4) verstellbaren Halterung (12) befestigt ist.

2. Hintersitzanordnung nach Anspruch 1, **dadurch gekennzeichnet, daß** die Halterung (12) bei der Verstellung durch zumindest eine ortsfeste Schiene oder ein Schienenpaar (6) geführt ist.

3. Hintersitzanordnung nach Anspruch 1 oder 2, **dadurch gekennzeichnet, daß** die Halterung (12) gemeinsam mit dem Sitz (2) verstellbar ist.

4. Hintersitzanordnung nach einem der Ansprüche 1 bis 3, **dadurch gekennzeichnet, daß** zur Verstellung des Sitzes (2) am Fahrzeugboden (5) zwei in Längsrichtung des Kraftfahrzeuges und beabstandet zueinander angeordnete Schienenpaare (6) mit jeweils einer gegenüber dem Fahrzeugboden (5) verschiebbaren Oberschiene (7) vorgesehen sind, welche sowohl mit dem Sitz (2) als auch mit der Halterung (12) verbunden sind.

5. Hintersitzanordnung nach einem der Ansprüche 1 bis 4, **dadurch gekennzeichnet, daß** die Halterung (12) zwischen dem Sitz (2) und dem Laderaumboden (4) angeordnet und zur Verbindung mit den Oberschienen (7) jeweils ein Stützbein (18) aufweist, die durch ein etwa waagerechtes und in Querrichtung des Kraftfahrzeuges verlaufendes Mittelteil (19) miteinander verbunden sind.

6. Hintersitzanordnung nach Anspruch 4 oder 5, **dadurch gekennzeichnet, daß** die Stützbeine (18) mit der jeweiligen Oberschiene (7) lösbar oder unlösbar verbunden sind.

7. Hintersitzanordnung nach einem der Ansprüche 1 bis 6, **dadurch gekennzeichnet, daß** die Abdeckung (11) zumindest teilweise durch eine plattenförmig ausgebildete Klappe (13 bzw. 15) gebildet ist, die um eine waagerechte, etwa in der Ebene des Laderaumbodens (4) liegende und in Querrichtung des Kraftfahrzeuges ausgerichtete Achse (16) schwenkbar an der Halterung (12), vorzugsweise am Mittelteil (19) angelenkt ist.

8. Hintersitzanordnung nach Anspruch 6 oder 7, **dadurch gekennzeichnet, daß** die Klappe (13) zumindest am freien Ende flächig auf dem Laderaumboden (4) aufliegt.

9. Hintersitzanordnung nach einem der Ansprüche 1 bis 8, mit einer am Sitz (2) nach vorn schwenkbaren Rükkenlehne (9), wobei in der nach vorn geschwenkten Position der Rückenlehne (9) ein weiterer Spalt (28) zwischen der Rückenlehne (9) und der übrigen Ladefläche gebildet wird, **dadurch gekennzeichnet, daß** die Abdeckung (11) eine weitere an der Halterung (12) um die Achse (16) schwenkbare Klappe (15) aufweist, die in der etwa vertikalen Position der Rükkenlehne (9) etwa parallel einer Rückfläche (14) der Rückenlehne (9) verläuft und in der nach vorn geschwenkten Position der Rückenlehne (9) durch Schwenkung ebenfalls nach vorn den weiteren Spalt (28) schließt.

10. Hintersitzanordnung nach Anspruch 9, wobei der Sitz (2) bzw. die Rückenlehne (9) in eine Position überführbar ist, in der die Rückfläche (14) der Rückenlehne (9) etwa in der Ebene des Laderaumbodens (4) liegt, **dadurch gekennzeichnet, daß** die sich in der nach vorn geschwenkten Position befindliche Klappe (15) ebenfalls in der Ebene des Laderaumbodens (4) liegt, so daß diese Klappe (15) zusammen mit der am Laderaumboden (4) abstützenden Klappe (13) eine etwa durchgehend ebene Ladefläche bilden.

11. Hintersitzanordnung nach einem der Ansprüche 1 bis 10, **dadurch gekennzeichnet, daß** bei in Längsrichtung des Kraftfahrzeuges nach vorn verstelltem Sitz (2) zwischen diesem, dem Fahrzeugboden 5 und dem Laderaumboden (4) ein Staufach (29) gebildet ist, welcher durch Schwenkung der am Laderaumboden (4) abstützenden Klappe (13) um die Achse (16) nach oben zugänglich ist.

12. Hintersitzanordnung nach einem der Ansprüche 1 bis 11, **dadurch gekennzeichnet, daß** die Abdeckung (11) bzw. zumindest eine diese bildende Klappe (13 bzw. 15) von einer Feder in die etwa waagerechte Position vorgespannt ist.

## Claims

1. A rear seat arrangement for a motor vehicle which is arranged in front of a loading space and which, for the purposes of enlarging the loading space, comprises at least one adjustable seat that is supported on a vehicle floor which is at a lower level than the floor of the loading space, wherein there is provided at least one cover that lies approximately in the plane of the floor of the loading space for closing a gap which is formed in the region of the floor of the loading space due to the adjustment of the seat, **characterized in that** the cover (11) is fixed to a support member (12) that is adjustable in the longitudinal direction of the motor vehicle and parallel to the floor of the loading space (4).

2. A rear seat arrangement in accordance with Claim 1, **characterized in that** the support member (12) is guided by at least one fixed rail or a pair of rails (6) during the adjustment process.

3. A rear seat arrangement in accordance with Claim 1 or 2, **characterized in that** the support member (12) is adjustable together with the seat (2).

4. A rear seat arrangement in accordance with any of the Claims 1 to 3, **characterized in that**, for the purposes of adjusting the seat (2), there are provided on the vehicle floor (5) two mutually spaced pairs of rails (6) which are arranged in the longitudinal direction of the motor vehicle, said pairs of rails each having an upper rail (7) which is displaceable with respect to the vehicle floor (5), the upper rails being connected to both the seat (2) and the support member (12).

5. A rear seat arrangement in accordance with any of the Claims 1 to 4, **characterized in that** the support member (12) comprises a respective supporting leg (18) which is arranged between the seat (2) and the floor of the loading space (4) and serves for the connection to the upper rails (7), said supporting legs being connected together by means of a central part (19) which extends approximately horizontally and in a direction transversely of the motor vehicle.

6. A rear seat arrangement in accordance with Claim 4 or 5, **characterized in that** the supporting legs (18) are connected to the respective upper rail (7) in releasable or non-releasable manner.

7. A rear seat arrangement in accordance with any of the Claims 1 to 6, **characterized in that** the cover (11) is formed at least partly by a plate-shaped flap (13 or 15) which is articulated to the support member (12), preferably to the central part (19), such as to be pivotal about a horizontal axis (16) lying approximately in the plane of the floor of the loading space (4) and oriented in the transverse direction of the motor vehicle.

8. A rear seat arrangement in accordance with Claim 6 or 7, **characterized in that** at least the free end of the flap (13) rests flatly on the floor of the loading space (4).

9. A rear seat arrangement in accordance with any of the Claims 1 to 8 comprising a backrest (9) on the seat (2) which is adapted to be tilted forwardly, wherein a further gap (28) is formed between the backrest (9) and the remaining loading area in the forwardly tilted position of the backrest (9), **characterized in that** the cover (11) comprises a further flap (15) on the support member (12) which is pivotal about the axis (16) and extends approximately parallel to a rear surface (14) of the backrest (9) in the approximately vertical position of the backrest (9) and which, in the forwardly tilted position of the backrest (9), closes the further gap (28) by virtue of a pivotal movement also in the forward direction.

10. A rear seat arrangement in accordance with Claim 9 wherein the seat (2) or the backrest (9) is transferable into a position in which the rear surface (14) of the backrest (9) lies approximately in the plane of the floor of the loading space (4), **characterized in that** when the flap (15) is in its forwardly pivoted position it also lies in the plane of the floor of the loading space (4) so that this flap (15) forms an approximately continuous flat loading area together with the flap (13) which is supported on the floor of the loading space (4).

11. A rear seat arrangement in accordance with any of the Claims 1 to 10, **characterized in that**, in the case where the seat (2) is displaced forwardly in the longitudinal direction of the motor vehicle, a storage compartment (29) is formed between said seat, the vehicle floor 5 and the floor of the loading space (4), said compartment being accessible from above by pivoting the flap (13) supported on the floor of the loading space (4) about the axis (16).

12. A rear seat arrangement in accordance with any of the Claims 1 to 11, **characterized in that** the cover (11) or at least a flap (13 or 15) forming said cover is biased into the approximately horizontal position by means of a spring.

## Revendications

1. Agencement de siège arrière pour un véhicule automobile, lequel est agencé en amont d'un espace de chargement et comporte au moins un siège réglable, qui est en appui sur un plancher du véhicule agencé plus bas que le plancher de l'espace de chargement, une plaque de protection, située à peu près dans le plan du plancher de l'espace de chargement, étant prévue pour obturer une fente formée dans la zone du plancher de l'espace de chargement par le déplacement du siège, **caractérisé en ce que** la plaque de protection (11) est fixée contre un support (12) réglable dans le sens longitudinal du véhicule automobile et parallèlement au plancher de l'espace de chargement (4).

2. Agencement de siège arrière selon la revendication 1, **caractérisé en ce que** le support (12), au moment du réglage, est guidé par au moins un rail stationnaire ou une paire de rails (6).

3. Agencement de siège arrière selon la revendication 1 ou 2, **caractérisé en ce que** le support (12) est réglable conjointement avec le siège (2).

4. Agencement de siège arrière selon l'une quelconque des revendications 1 à 3, **caractérisé en ce que** pour le réglage du siège (2) il est prévu sur le plancher du véhicule (5) deux paires de rails (6), qui sont agencées dans le sens longitudinal du véhicule automobile et à distance l'une de l'autre et qui comportent chacune un rail supérieur (7), qui est réglable par rapport au plancher du véhicule (5) et qui est assemblé avec le siège (2), de même qu'avec le support (12).

5. Agencement de siège arrière selon l'une quelconque des revendications 1 à 4, **caractérisé en ce que** le support (12) est agencé entre le siège (2) et le plancher de l'espace de chargement (4) et, pour l'assemblage avec chacun des rails supérieurs (7), comporte des pieds de support (18), qui sont assemblés entre eux par une partie centrale (19) orientée sensiblement horizontalement et dans le sens transversal du véhicule automobile.

6. Agencement de siège arrière selon la revendication 4 ou 5, **caractérisé en ce que** les pieds de support (18) sont assemblés de manière amovible ou inamovible avec le rail supérieur (7) correspondant.

7. Agencement de siège arrière selon l'une quelconque des revendications 1 à 6, **caractérisé en ce que** la plaque de protection (11) est formée au moins partiellement par un rabat (13 ou 15) en forme de plateau, qui est articulé contre le support (12), de préférence contre la partie centrale (19) de manière à pouvoir pivoter autour d'un axe (16) horizontal situé à peu près dans le plan du plancher de l'espace de chargement (4) et orienté dans le sens transversal du véhicule automobile.

8. Agencement de siège arrière selon la revendication 6 ou 7, **caractérisé en ce que** le rabat (13), au moins sur l'extrémité libre, est en appui à plat sur le plancher de l'espace de chargement (4).

9. Agencement de siège arrière selon l'une quelconque des revendications 1 à 8, comportant un dossier (9) pouvant pivoter vers l'avant, une fente supplémentaire (28) se formant, dans la position du dossier (9) pivoté vers l'avant, entre le dossier (9) et le reste de la surface de chargement, **caractérisé en ce que** la plaque de protection (11) comporte un rabat supplémentaire (15), qui est apte à pivoter contre le support (12) autour de l'axe (16) et qui, dans la position à peu près verticale du dossier (9), est sensiblement parallèle à une face arrière (14) du dossier (9) et, dans la position du dossier (9) pivoté vers l'avant, obture la fente supplémentaire (28) également par pivotement vers l'avant.

10. Agencement de siège arrière selon la revendication 9, dans lequel le siège (2), plus précisément le dossier (9) peut être amené dans une position dans laquelle la face arrière (14) du dossier (9) est disposée à peu près dans le plan du plancher de l'espace de chargement (4), **caractérisé en ce que** le rabat (15), situé dans la position pivotée vers l'avant, est également disposé dans le plan du plancher de l'espace de chargement (4), de telle sorte que ce rabat (15), conjointement avec le rabat (13) en appui sur le plancher de l'espace de chargement (4), forme une surface de chargement sensiblement plane en continu.

11. Agencement de siège arrière selon l'une quelconque des revendications 1 à 10, **caractérisé en ce que**, lorsque le siège (2) est déplacé vers l'avant dans le sens longitudinal du véhicule automobile, il se forme entre celui-ci, le plancher du véhicule (5) et le plancher de l'espace de chargement (4) un espace de rangement (29), qui est accessible par le haut après le pivotement du rabat (13), en appui sur le plancher de l'espace de chargement (4), autour de l'axe (16).

12. Agencement de siège arrière selon l'une quelconque des revendications 1 à 11, **caractérisé en ce que** la plaque de protection (11), ou respectivement au moins un rabat (13 ou 15) formant celle-ci, est précontrainte par un ressort dans la position sensiblement horizontale.
